# EUROPEAN PATENT SPECIFICATION

(11) **EP 2 627 227 B1**
(45) Date of publication and mention of the grant of the patent: **16.07.2014**
(21) Application number: 11785097.4
(22) Date of filing: 06.10.2011
(51) Int. Cl.: A47J 31/44

(54) **MILK EMULSIFYING METHOD AND UNIT**
MILCHEMULGIERUNGSVERFAHREN UND EINHEIT
PROCÉDÉ ET UNITÉ D'ÉMULSION DE LAIT

(30) Priority: 13.10.2010 IT TO20100831
(43) Date of publication of application: 21.08.2013
(73) Proprietor: N&W Global Vending S.p.A., Valbrembo (IT)
(72) Inventor: MOSCONI, Claudio, 24100 Bergamo (IT)
(74) Representative: Giannini, Manuela
(86) International application number: PCT/IB2011/054412
(87) International publication number: WO 2012/049597

(56) References cited:
- EP-A1- 1 785 074
- EP-A1- 2 275 010
- US-A1- 2010 075 007

## Description

### TECHNICAL FIELD

The present invention relates to a milk emulsifying method and unit.

The present invention may be used to particular advantage for emulsifying milk in automatic or non-automatic infusion devices, for producing cappuccini or similar infusion beverages, and to which specific reference is made in the following description.

### BACKGROUND ART

Infusion devices of the above type normally employ milk emulsifying units of the type described, for example, in EP 1785074, which normally comprise a first milk feed line; a second air feed line; and a third steam feed line, which can be cut off by a valve to produce cold emulsified milk.

The three feed lines converge substantially independently, the first milk feed line always fully independent of the other two, inside an emulsifying chamber - normally a venturi chamber - which mixes the milk, air and steam (if any) to supply emulsified milk at the outlet, i.e. milk with a surface froth or 'cream', whose temperature and volume depend on the presence or absence of steam, the steam temperature, and the milk, air and steam ratio, which is controlled by regulating flow from a pump along the first line, and by regulating airflow along the second line by means of hydraulic resistors for regulating flow continuously or in pulses at adjustable frequency.

Though the amount of air, in the form of bubbles, in the emulsified milk is adjustable, known emulsifying units of the above type have the drawback of enabling practically no control over the 'texture', i.e. diameter, of the bubbles, which is what determines the stability of the froth produced, i.e. the smaller the bubbles, the more stable the froth is.

The emulsifying chamber being a venturi chamber, in which air is injected into the milk flow at such high speed as to allow absolutely no control over the emulsion produced, there is normally no way of predicting whether the air injected produces a large number of relatively small-diameter bubbles, or only a few large-diameter bubbles, and, in the event of the latter, whether the bubbles are broken up at the emulsifying chamber outlet.

### DISCLOSURE OF INVENTION

It is an object of the present invention to provide a milk emulsifying method and unit designed to eliminate the above drawbacks.

More specifically, it is an object of the present invention to provide a milk emulsifying method and unit designed to control the number and texture of the air bubbles in the emulsified milk produced.

According to the present invention, there is provided a milk emulsifying method as claimed in Claim 1 and preferably in any one of the Claims depending directly or indirectly on Claim 1.

According to the present invention, there is also provided a milk emulsifying unit as claimed in Claim 7 and preferably in any one of the Claims depending directly or indirectly on Claim 7.

### BRIEF DESCRIPTION OF THE DRAWINGS

A non-limiting embodiment of the present invention will be described by way of example with reference to the accompanying drawings, in which :
Figure 1 shows a schematic of a preferred embodiment of the milk emulsifying unit according to the present invention;
Figure 2 shows an operating diagram of a detail in Figure 1.

### BEST MODE FOR CARRYING OUT THE INVENTION

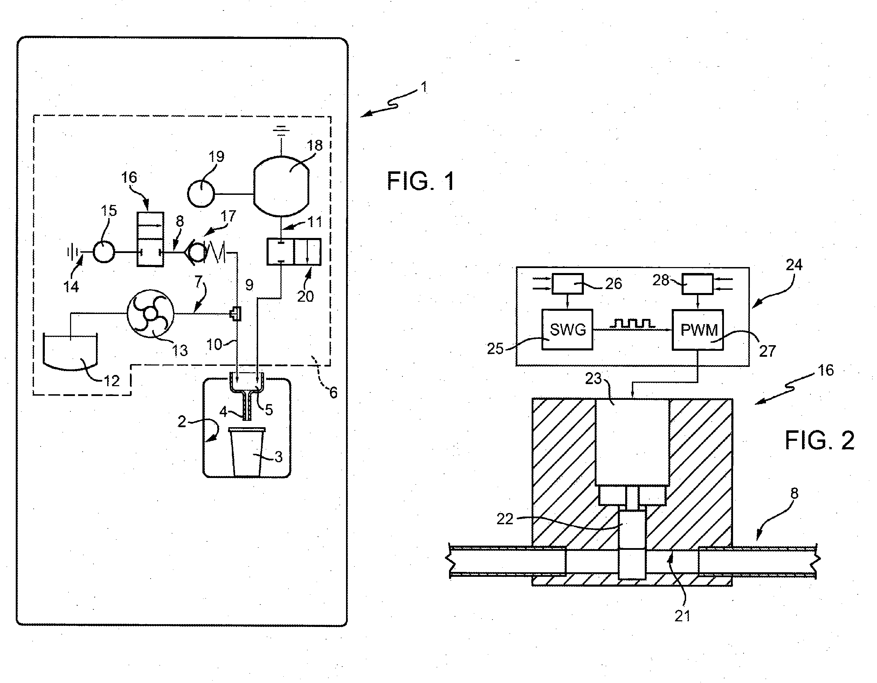

Number 1 in Figure 1 indicates as a whole an infusion device comprising an externally accessible seat 2 for a removable cup 3 for receiving a beverage, e.g. a cappuccino, containing emulsified milk, and which, as the beverage is being made, is positioned beneath the outlet 4 of an emulsifying chamber 5 - preferably a known venturi emulsifying chamber - of an emulsifying unit 6 of infusion device 1.

Emulsifying unit 6 comprises a milk feed line 7; an air feed line 8 communicating with feed line 7 at an intermediate 'Y' fitting 9, and having an end portion 10 in common with feed line 7 and terminating inside emulsifying chamber 5; and a steam feed line 11 terminating directly inside emulsifying chamber 5 and separate from feed lines 7 and 8.

Feed line 7 comprises a normally refrigerated tank 12, and extends from tank 12 to intermediate fitting 9 via a pump 13 - normally, though not necessarily, a gear pump.

Feed line 8 has an inlet 14 communicating with the outside, and extends from inlet 14 to intermediate fitting 9 via, and in the order shown : an optional air filter 15; a valve assembly 16 for controlling airflow along feed line 8; and an optional calibrated non-return valve 17, which permits airflow to intermediate fitting 9, but under no circumstances permits backflow of milk to valve assembly 16 via intermediate fitting 9.

Feed line 11 comprises a boiler 18 supplied with water from a source (not shown), such as the water mains, and which feeds steam to emulsifying chamber 5 via an electrically actuated shut-off valve 20 and at a given temperature controlled by a thermostat unit 19 and preferably on the basis of the milk temperature recorded by a sensor (not shown) at intermediate fitting 9.

As shown in Figure 2, valve assembly 16 is a repeat chopping type, and comprises a passage 21 defining a portion of feed line 8; a preferably electrically actuated shutter 22 movable through passage 21 between an open position and a closed position opening and closing passage 21 respectively; a normally electromagnetic or piezoelectric actuator 23 for activating shutter 22; and a repeat chopping unit RCU 24 implemented by an electronic control system designed, among other things, to supply adequate power to control electromagnetic actuator 23.

Schematically, RCU 24 comprises a square wave generator SWG 25 for producing a train of square waves, the frequency of which is regulated by a control circuit 26 on the basis of a given number of partly set and partly recorded quantities (e.g. a given range; an external temperature; beverage characteristics dictated by average consumer preference in the country in which infusion device 1 is operated, etc.); and a pulse width modulator PWM 27 for regulating the duty cycle, i.e. activation time within each pulse, and which is controlled by a control circuit 28 on the basis of a given number of other partly set and partly recorded quantities (e.g. a given range; steam temperature; the temperature inside cup 3, etc.).

RCU 24 is preferably implemented in a PLC or, in general, in an integrated or distributed electronic control system designed to receive and process recorded quantities, calculate the necessary frequency and duty cycle, and supply the necessary power to actuator 23.

Valve assembly 16 is a commercial type, has a very fast response time (in the order of a thousandth of a second), and is used in emulsifying unit 6 to break up or 'chop' the continuous airflow drawn through inlet 14 into a succession of 'segments', each defining an air bubble on entering the milk flow at intermediate fitting 9.

Because air is drawn from the outside by the low pressure produced along feed line 8, just upstream from intermediate fitting 9, the air 'segments' moving along feed line 8 to intermediate fitting 9 all travel at the same speed, like the peaks of a single pressure wave modulated by valve assembly 16, remain separate, and penetrate the milk flow from feed line 7 without compacting, i.e. still remaining separate, on account of the substantially zero relative speed at which the air 'segments' enter the milk flow.

In other words, because of the presence of valve assembly 16, pre-emulsification occurs along shared end portion 10, so that what flows out of shared end portion 10 is a highly stable mixture of milk and dispersed air bubbles.

In emulsifying unit 6, RCU 24 serves to adjust the size and number of these air bubbles, and so adjust both the amount and texture of the froth produced, without having to intervene on the cross sectional size of passage 21, which may thus be made large enough to reduce cleaning, which can be further reduced using air filter 15.

The number of air bubbles produced can be adjusted by adjusting the frequency of the square waves controlling actuator 23 by means of SWG 25; and the size, i.e. 'texture', of the air bubbles can be adjusted by adjusting the length of the duty cycle, i.e. the opening time of shutter 22, by means of PWM 27.

In other words, regulating the frequency and duration of the activating pulse of shutter 22 by means of PWM 27 provides for both dynamic 'mean adjustment' and choking of the airflow to achieve optimum quantity and size of the air bubbles in the emulsion.

Bubble size being strongly affected by beverage temperature, electrically actuated valve 20 is kept closed to produce cold emulsified milk, and the above adjustments preferably also take ambient temperature into account; and, conversely, to produce hot emulsified milk, electrically actuated valve 20 is kept open, and the above adjustments preferably also take into account the temperature setting of thermostat unit 19.

Valve assembly 16 may obviously be kept closed to produce a flat beverage, though this operating mode is outside the scope of the technical problem dealt with herein, and is included solely for the sake of thoroughness.

## Claims

1. A milk emulsifying method comprising the steps of :
- feeding a first flow of milk along a first feed line (7) to an emulsifying chamber (5); and
- pre-emulsifying the milk with air, upstream from the emulsifying chamber, by drawing a second flow of air, by means of the first flow, along a second feed line (8) converging with the first feed line (7) along a pre-emulsifying end portion (10) upstream from the emulsifying chamber (5); the second flow being subjected, at a point along the second feed line (8) and upstream from said end portion (10), to a repeat chopping operation, in which chopping is regulated in both frequency and duty cycle.

2. A method as claimed in Claim 1, wherein the second flow is drawn from the outside and, upstream from said point along the second feed line (8), is continuous.

3. A method as claimed in Claim 1 or 2, wherein the second flow is filtered upstream from said point along the second feed line (8).

4. A method as claimed in one of the foregoing Claims, wherein said repeat chopping operation is performed by a valve assembly (16) located at said point along the second feed line (8), and comprising an electrically actuated shutter (22) controlled by a repeat chopping unit (24).

5. A method as claimed in Claim 4, wherein chopping is regulated in frequency and duty cycle by controlling the electrically actuated shutter (22) by means of a train of square waves, of adjustable given frequency, emitted by a square wave generator (25), and by adjustably modulating the train of square waves by means of a pulse width modulator (27).

6. A method as claimed in one of the foregoing Claims, wherein the first flow is forced by a pump (13).

7. A milk emulsifying unit (6) comprising an emulsifying chamber (5); a first feed line (7) for feeding a first flow of milk to the emulsifying chamber (5); a second feed line (8) converging with the first feed line (7) along a shared end portion (10) upstream from the emulsifying chamber (5), and for feeding a second flow of air to the shared end portion (10), and a pre-emulsified flow of milk and air to the emulsifying chamber (5); and a valve assembly (16) located at a point along the second feed line (8) and upstream from the shared end portion (10); the valve assembly comprising an electrically actuated shutter (22) movable between an open position and a closed position opening and closing the second feed line (8) respectively; and a repeat chopping unit (24) adapted for controlling the shutter (22) in both frequency and duty cycle.

8. A unit as claimed in Claim 7, wherein the repeat chopping unit (24) comprises a square wave generator (25), and a pulse width modulator (27), both integrated in the repeat chopping unit (24); the square wave generator (25) emitting a train of square waves at a given adjustable frequency; and the pulse width modulator (27) being interposed between the square wave generator (25) and the electrically actuated shutter (22), and being designed to receive and adjustably modulate the train of square waves to control the electrically actuated shutter (22) in frequency and duty cycle.

9. A unit as claimed in Claim 7 or 8, wherein the repeat chopping unit (24) is implemented in a PLC or an integrated or distributed electronic control system for receiving and processing recorded quantities, calculating the necessary frequency and duty cycle, and supplying the necessary power to activate the shutter (22).

10. A unit as claimed in Claim 8 or 9, wherein the repeat chopping unit (24) comprises control means (26) for controlling the frequency of the square wave generator (25) on the basis of a given number of partly set and partly recorded quantities.

11. A unit as claimed in one of Claims 8 to 10, wherein the repeat chopping unit (24) comprises control means (28) connected to the pulse width modulator (27) to control the duty cycle of the electrically actuated shutter (22) on the basis of a given number of partly set and partly recorded quantities.

12. A unit as claimed in one of Claims 7 to 11, wherein the second feed line (8) has an inlet (14) communicating with the outside.

13. A unit as claimed in one of Claims 7 to 12, and also comprising an air filter (15) located along the second feed line (8), upstream from the valve assembly (16).

14. A unit as claimed in one of Claims 7 to 13, and also comprising a non-return valve (17) located along the second feed line (8), downstream from the valve assembly (16).

15. A unit as claimed in one of Claims 7 to 14, wherein the first feed line (7) comprises a milk pump (13).

16. A unit as claimed in one of Claims 7 to 15, and also comprising a third feed line (11) independent of the first and second feed line (7, 8), and for feeding steam to the emulsifying chamber (5).

17. A unit as claimed in Claim 16, wherein the emulsifying chamber (5) is a venturi emulsifying chamber.

18. An infusion device for producing infused beverages, and comprising a milk emulsifying unit (6) as claimed in any one of Claims 7 to 17.

## Patentansprüche

1. Milch-Emulgierverfahren, das die folgenden Schritte umfasst:
- Einspeisen eines ersten Flusses aus Milch entlang einer ersten Einspeiseleitung (7) in eine Emulgierkammer (5);
- Voremulgieren der Milch mit Luft zulaufseitig von der Emulgierkammer durch Ansaugen eines zweiten Flusses aus Luft unter Verwendung des ersten Flusses entlang einer zweiten Einspeiseleitung (8), die mit der ersten Einspeiseleitung (7) entlang eines Voremulgier-Endabschnitts (10) zulaufseitig von der Emulgierkammer (5) zusammentrifft; wobei der zweite Fluss an einem Punkt entlang der zweiten Einspeiseleitung (8) und zulaufseitig von dem Endabschnitt (10) einem wiederholten Zerteilvorgang unterworfen wird, wobei sowohl eine Frequenz als auch ein Arbeitszyklus des Zerteilens reguliert werden.

2. Verfahren nach Anspruch 1, wobei der zweite Fluss von außen angesaugt wird und zulaufseitig von dem Punkt entlang der zweiten Einspeiseleitung (8) ununterbrochen ist.

3. Verfahren nach Anspruch 1 oder 2, wobei der zweite Fluss zulaufseitig von dem Punkt entlang der zweiten Einspeiseleitung (8) gefiltert wird.

4. Verfahren nach einem der vorhergehenden Ansprüche, wobei der wiederholte Zerteilvorgang durch eine Ventilanordnung (16) ausgeführt wird, die sich an dem Punkt entlang der zweiten Einspeiseleitung (8) befindet und einen elektrisch betätigten Verschluss (22) umfasst, der durch eine Zerteilungswiederholeinheit (24) gesteuert wird.

5. Verfahren nach Anspruch 4, wobei die Frequenz und der Arbeitszyklus des Zerteilens durch Steuern des elektrisch betätigten Verschlusses (22) unter Verwendung einer Folge von Rechteckschwingungen einer anpassbaren vorgegebenen Frequenz, die durch einen Rechteckschwingungsgenerator (25) ausgesandt werden, und durch anpassbares Modulieren der Folge von Rechteckschwingungen mittels eines Pulsbreitenmodulators (27) reguliert wird.

6. Verfahren nach einem der vorhergehenden Ansprüche, wobei der erste Fluss durch eine Pumpe (13) angetrieben wird.

7. Milchemulgiereinheit (6), die Folgendes umfasst: eine Emulgierkammer (5); eine erste Einspeiseleitung (7), um einen ersten Fluss aus Milch in die Emulgierkammer (5) einzuspeisen; eine zweite Einspeiseleitung (8), die mit der ersten Einspeiseleitung (7) entlang eines gemeinsamen Endabschnitts (10) zulaufseitig von der Emulgierkammer (5) zusammentrifft, um einen zweiten Fluss aus Luft in den gemeinsamen Endabschnitt (10) und einen voremulgierten Fluss aus Milch und Luft in die Emulgierkammer (5) einzuspeisen; und eine Ventilanordnung (16), die sich an einem Punkt entlang der zweiten Einspeiseleitung (8) und zulaufseitig von dem gemeinsamen Endabschnitt (10) befindet; wobei die Ventilanordnung einen elektrischen betätigten Verschluss (22), der zwischen einer offenen und einer geschlossenen Position beweglich ist und die zweite Einspeiseleitung (8) jeweils öffnet und schließt; und eine Zerteilungswiederholeinheit (24), die dazu ausgelegt ist, sowohl die Frequenz als auch den Arbeitszyklus des Verschlusses (22) zu steuern, umfasst.

8. Einheit nach Anspruch 7, wobei die Zerteilungswiederholeinheit (24) einen Rechteckschwingungsgenerator (25) und einen Pulsbreitenmodulator (27) umfasst, die beide in die Zerteilungswiederholeinheit (24) integriert sind; wobei der Rechteckschwingungsgenerator (25) eine Folge von Rechteckschwingungen bei einer vorgegebenen anpassbaren Frequenz aussendet; und der Pulsbreitenmodulator (27) zwischen dem Rechteckschwingungsgenerator (25) und dem elektrisch betätigten Verschluss (22) angeordnet ist und dazu ausgelegt ist, die Folge von Rechteckschwingungen zu empfangen und anpassbar zu modulieren, um die Frequenz und den Arbeitszyklus des elektrisch betätigten Verschlusses (22) zu steuern.

9. Einheit nach Anspruch 7 oder 8, wobei die Zerteilungswiederholeinheit (24) in einem PLC oder einem integrierten oder verteilten elektronischen Steuersystem zum Empfangen und Verarbeiten von aufgezeichneten Größen, zum Berechnen der notwendigen Frequenz und des notwendigen Arbeitszyklus und zum Liefern der notwendigen Leistung, um den Verschluss (22) zu betätigen, implementiert ist.

10. Einheit nach Anspruch 8 oder 9, wobei die Zerteilungswiederholeinheit (24) Steuermittel (26) zum Steuern der Frequenz des Rechteckschwingungsgenerators (25) auf der Basis einer vorgegebenen Anzahl von teilweise festgelegten und teilweise aufgezeichneten Größen umfasst.

11. Einheit nach einem der Ansprüche 8 bis 10, wobei die Zerteilungswiederholeinheit (24) Steuermittel (28) umfasst, die mit dem Pulsbreitenmodulator (27) verbunden sind, um den Arbeitszyklus des elektrisch betätigten Verschlusses (22) auf der Basis einer vorgegebenen Anzahl von teilweise festgelegten und teilweise aufgezeichneten Größen zu steuern.

12. Einheit nach einem der Ansprüche 7 bis 11, wobei die zweite Einspeiseleitung (8) einen Einlass (14) besitzt, der mit der Außenseite kommuniziert.

13. Einheit nach einem der Ansprüche 7 bis 12, die zudem einen Luftfilter (15) umfasst, der sich entlang der zweiten Einspeiseleitung (8) zulaufseitig von der Ventilanordnung (16) befindet.

14. Einheit nach einem der Ansprüche 7 bis 13, die zudem ein Rückschlagventil (17) umfasst, das sich entlang der zweiten Einspeiseleitung (8) ablaufseitig von der Ventilanordnung (16) befindet.

15. Einheit nach einem der Ansprüche 7 bis 14, wobei die erste Einspeiseleitung (7) eine Milchpumpe (13) umfasst.

16. Einheit nach einem der Ansprüche 7 bis 15, die zudem eine dritte Einspeiseleitung (11), die unabhängig von der ersten und der zweiten Einspeiseleitung (7, 8) ist, umfasst, um Dampf in die Emulgierkammer (5) einzuspeisen.

17. Einheit nach Anspruch 16, wobei die Emulgierkammer (5) eine Venturi-Emulgierkammer ist.

18. Aufgießvorrichtung zur Herstellung von Aufgussgetränken, die eine Milchemulgiereinheit (6) nach einem der Ansprüche 7 bis 17 umfasst.

## Revendications

1. Procédé d'émulsion de lait comprenant les étapes de :
- acheminement d'un premier flux de lait le long d'une première ligne d'acheminement (7) à une chambre d'émulsion (5) ; et
- pré-émulsion du lait avec de l'air, en amont de la chambre d'émulsion en amenant un deuxième flux d'air, au moyen du premier flux, le long d'une deuxième ligne d'acheminement (8) convergeant avec la première ligne d'acheminement (7) le long d'une partie terminale de pré-émulsion (10) en amont de la chambre d'émulsion (5) ; le deuxième flux étant soumis, à un point le long de la deuxième ligne d'acheminement (8) et en amont de ladite partie terminale (10), à une opération de hachage répété, ledit hachage étant régulé à la fois en termes de fréquence et de cycle de service.

2. Procédé selon la revendication 1, dans lequel le deuxième flux provient de l'extérieur et en amont dudit point le long de la deuxième ligne d'acheminement (8), est continu.

3. Procédé selon la revendication 1 ou 2, dans lequel le deuxième flux est filtré en amont dudit point le long de la deuxième ligne d'acheminement (8).

4. Procédé selon l'une des revendications précédentes, dans lequel ladite opération de hachage est réalisée par un ensemble de valve (16) situé sur ledit point le long de la deuxième ligne d'acheminement (8) et comprenant un obturateur actionné électriquement (22) commandé par une unité de hachage répété (24).

5. Procédé selon la revendication 4, dans lequel le hachage est régulé en termes de fréquence et de cycle de service en commandant l'obturateur (22) actionné électriquement au moyen d'une série d'ondes carrées d'une fréquence donnée ajustable, émises par un générateur d'ondes carrées (25) et en modulant de façon ajustable la série d'ondes carrées au moyen d'un modulateur de largeur d'impulsion (27).

6. Procédé selon l'une des revendications précédentes, dans lequel le premier flux est actionné par une pompe (13).

7. Unité d'émulsion de lait (6) comprenant une chambre d'émulsion (5) ; une première ligne d'acheminement (7) pour acheminer un premier flux de lait à la chambre d'émulsion (5) ; une deuxième ligne d'acheminement (8) convergeant avec la première ligne d'acheminement (7) le long d'une partie terminale partagée (10) en amont de la chambre d'émulsion (5) et pour acheminer un deuxième flux d'air à la partie terminale partagée (10) et un flux pré-émulsifié de lait et d'air à la chambre d'émulsion (5) ; et un ensemble de valve (16) situé sur un point le long de la deuxième ligne d'acheminement (8) et en amont de la partie terminale partagée (10) ; l'ensemble de valve comprenant un obturateur (22) actionné électriquement, mobile entre une position ouverte et une position fermée ouvrant et fermant la deuxième ligne d'acheminement (8) respectivement ; et une unité de hachage répétée (24) adaptée pour commander l'obturateur (22) à la fois en termes de fréquence et de cycle de service.

8. Unité selon la revendication 7, dans laquelle l'unité de hachage répété (24) comprend un générateur d'ondes carrées (25) et un modulateur de largeur d'impulsion (27), tous deux étant intégrés dans l'unité de hachage répété (24) ; le générateur d'ondes carrées (25) émettant une série d'ondes carrées à une fréquence donnée ajustable ; et le modulateur de largeur d'impulsion (27) étant interposé entre le générateur d'ondes carrées (25) et l'obturateur (22) actionné électriquement et étant conçu pour recevoir et moduler de façon ajustable la série d'ondes carrées pour commander l'obturateur (22) actionné électriquement en termes de fréquence et de cycle de service.

9. Unité selon la revendication 7 ou 8, dans laquelle l'unité de hachage répétée (24) est mise en oeuvre dans un PLC ou un système de commande électronique intégré ou distribué pour recevoir et traiter des quantités enregistrées, calculer la fréquence et le cycle de service nécessaires et fournir l'énergie nécessaire pour activer l'obturateur (22).

10. Unité selon la revendication 8 ou 9, dans laquelle l'unité de hachage répété (24) comprend des moyens de commande (26) pour commander la fréquence du générateur d'ondes carrées (25) sur la base d'un nombre donné de quantités en partie fixées et en partie enregistrées.

11. Unité selon l'une des revendications 8 à 10, dans laquelle l'unité de hachage répétée (24) comprend des moyens de commande (28) raccordés au modulateur de largeur d'impulsion (27) pour commander le cycle de service de l'obturateur (22) actionné électriquement sur la base d'un nombre donné de quantités en partie fixées et en partie enregistrées.

12. Unité selon l'une des revendications 7 à 11, dans laquelle la deuxième ligne d'acheminement (8) a une entrée (14) communiquant avec l'extérieur.

13. Unité selon l'une des revendications 7 à 12 et comprenant également un filtre à air (15) situé le long de la deuxième ligne d'acheminement (8) en amont de l'ensemble de valve (16).

14. Unité selon l'une des revendications 7 à 13, et comprenant également une valve anti-retour (17) située le long de la deuxième ligne d'acheminement (8) en aval de l'ensemble de valve (16).

15. Unité selon l'une des revendications 7 à 14, dans laquelle la première ligne d'acheminement (7) comprend une pompe de lait (13).

16. Unité selon l'une des revendications 7 à 15 et comprenant également une troisième ligne d'acheminement (11) indépendante des première et deuxième lignes d'acheminement (7, 8) et pour acheminer de la vapeur à la chambre d'émulsion (5).

17. Unité selon la revendication 16, dans laquelle la chambre d'émulsion (5) est une chambre d'émulsion venturi.

18. Dispositif d'infusion pour produire des boissons infusées et comprenant une unité d'émulsion de lait (6) selon l'une des revendications 7 à 17.
